# EUROPÄISCHE PATENTSCHRIFT

(11) **EP 4 245 014 B1**
(45) Veröffentlichungstag und Bekanntmachung des Hinweises auf die Patenterteilung: **18.02.2026**
(21) Anmeldenummer: 21811290.2
(22) Anmeldetag: 12.11.2021
(51) Int. Cl.: H04L 9/40, B01L 1/00, B01L 3/00

(54) **AUTHENTIFIZIERBARES PROBENSAMMEL-KIT ZUR PFLANZENPROBEN-SAMMLUNG UND DESSEN ANWENDUNG**
AUTHENTICATABLE SAMPLE COLLECTION KIT FOR PLANT SAMPLE COLLECTION, AND USE THEREOF
ENSEMBLE DE COLLECTE D'ÉCHANTILLONS AUTHENTIFIABLE DESTINÉ À LA COLLECTE D'ÉCHANTILLONS DE VÉGÉTAUX ET SON UTILISATION

(30) Priorität: 13.11.2020 DE 102020130008
(43) Veröffentlichungstag der Anmeldung: 20.09.2023
(73) Patentinhaber: Fraunhofer-Gesellschaft zur Förderung der angewandten Forschung e.V., 80686 München (DE); Universität des Saarlandes, 66123 Saarbrücken (DE)
(72) Erfinder: ZIMMERMANN, Heiko, 66280 Sulzbach (DE)
(74) Vertreter: v. Bezold & Partner Patentanwälte - PartG mbB
(86) Internationale Anmeldenummer: PCT/EP2021/081498
(87) Internationale Veröffentlichungsnummer: WO 2022/101398

(56) Entgegenhaltungen:
- WO-A1-2017/215939
- DE-B3- 102005 040 872
- US-A1- 2006 099 567

## Beschreibung

Die Erfindung betrifft ein Probensammel-Kit, das zur Sammlung von Pflanzenproben, insbesondere zur Sammlung von Algenproben für biomedizinische Anwendungen, eingerichtet ist. Des Weiteren betrifft die Erfindung eine Authentifizierungsanordnung und ein Verfahren zur Prüfung eines Zustands des Probensammel-Kits. Anwendungen der Erfindung sind bei der Probensammlung zur Gewinnung von Pflanzenextrakten, insbesondere für biomedizinische Anwendungen, z. B. zur Gewinnung von Alginatgranulat, gegeben.

Die Gewinnung von Alginat aus natürlichen Algenproben ist allgemein bekannt. Alginat hat zahlreiche biomedizinische Anwendungen, wie z. B. bei der Herstellung von Implantaten oder in der Zellbiologie. Insbesondere für diese Anwendungen wird eine besondere Reinheit des Alginats und eine reproduzierbare Prozesskette von der Sammlung der Algen in der freien Natur bis zur Gewinnung und Verarbeitung von Alginat im Labor gefordert.

In EP 3 257 586 A1 und in der zugehörigen Internationalen Patentanmeldung WO2017/215939 A1 ("Probensammel-Kit und Verfahren zur Sammlung von Pflanzenproben, insbesondere von Algenproben") wird ein Probensammel-Kit beschrieben, das durchgehend in der gesamten Prozesskette von der Sammlung der Algen in der Natur bis zur Prozessierung im Labor anwendbar ist. Das Probensammel-Kit wird in allen Phasen der Prozesskette angewendet und erlaubt daher die Einhaltung einer Reproduzierbarkeit der Prozesskette.

Praktische Erfahrungen zeigen jedoch, dass Alginate, selbst wenn sie mit dem Probensammel-Kit gemäß EP 3 257 586 A1 gesammelt und verarbeitet werden, immer noch unerwünschte Schwankungen der Biofunktionalität aufweisen können. Es wurde festgestellt, dass trotz Überprüfung der Probensammel-Kits vor ihrer Anwendung und strenger Einhaltung von Ernte- und Transportbedingungen Anforderungen für die Zulassung von Pflanzenprodukten für medizinische Anwendungen, insbesondere Richtlinien zur Qualitätssicherung der Produktionsabläufe und -umgebung (z. B. GMP, "Good Manufacturing Practice") nicht immer zuverlässig erfüllt werden können.

Die genannten Probleme treten nicht nur bei der Sammlung von Algen und der Gewinnung von Alginat auf, sondern auch bei der Sammlung anderer Pflanzenproben, z. B. für die Wirkstoffproduktion.

Die Aufgabe der Erfindung ist es, ein verbessertes Probensammel-Kit zur Sammlung von Pflanzenproben, insbesondere von Algenproben, und eine verbesserte Vorrichtung bzw. ein verbessertes Verfahren zur Prüfung eines Zustands eines Probensammel-Kits bereitzustellen, mit denen Nachteile herkömmlicher Techniken vermieden werden. Das Probensammel-Kit und die Prüfung von dessen Zustand sollen insbesondere die Anwendung von Probensammel-Kits und/oder die Gewinnung von Alginat mit erhöhter Zuverlässigkeit und Reproduzierbarkeit der Sammlung und Bearbeitung der Algen ermöglichen. Des Weiteren soll insbesondere die Erfüllung von Standards zur Qualitätssicherung, wie z.B. GMP-Standards, weiter verbessert werden.

Diese Aufgabe wird durch ein Probensammel-Kit, eine Authentifizierungsanordnung bzw. ein Verfahren zur Prüfung eines Zustands des Probensammel-Kits mit den Merkmalen der unabhängigen Ansprüche gelöst. Vorteilhafte Ausführungsformen und Anwendungen der Erfindung ergeben sich aus den abhängigen Ansprüchen.

Gemäß einem ersten allgemeinen Gesichtspunkt der Erfindung wird die oben genannte Aufgabe durch ein Probensammel-Kit gelöst, das zur Sammlung von Pflanzenproben, insbesondere von Algenproben für biomedizinische Anwendungen, eingerichtet ist. Das Probensammel-Kit umfasst mindestens einen Probenbehälter, der zur Aufnahme von Pflanzenproben eingerichtet ist, eine Sensoranordnung mit mehreren Sensoren, mit denen Probendaten erfassbar sind, eine Datenaufzeichnungseinrichtung, die zur Aufzeichnung der Probendaten eingerichtet ist, eine Werkzeuganordnung mit Sammelwerkzeugen, die für eine Ernte der Pflanzenproben eingerichtet sind, und mit Bearbeitungswerkzeugen, die für eine Bearbeitung der Pflanzenproben eingerichtet sind, eine Behältereinrichtung, die zur Aufnahme der Werkzeuganordnung und der Geräteanordnung in einem von der Umgebung isolierten Zustand eingerichtet ist, und Identifizierungsmarkierungen, die Identifizierungsdaten enthalten und an dem mindestens einen Probenbehälter, den Sammelwerkzeugen und den Bearbeitungswerkzeugen angebracht sind. Optional kann des Weiteren eine Geräteanordnung mit Hilfsgeräten vorgesehen sein, die bei der Sammlung, einem Transport und der Bearbeitung der Pflanzenproben verwendbar sind. Die Identifizierungsmarkierungen umfassen z. B. Strichcodes, QR-Codes, drahtlos auslesbare Speicher, insbesondere Transponder und/oder Zeichenfolgen aus Zahlen und/oder Buchstaben, vorzugsweise in wasserfester Form, welche die Identifizierungsdaten enthalten.

Gemäß der Erfindung umfasst das Probensammel-Kit des Weiteren eine Authentifizierungseinrichtung, die einen elektronisch auslesbaren Datenträger (Datenspeicher) mit Authentifizierungsdaten enthält, die einen Zustand des Probensammel-Kits repräsentieren, wobei die Authentifizierungseinrichtung an mindestens einem von der Behältereinrichtung, dem mindestens einen Probenbehälter, den Sammelwerkzeugen und den Bearbeitungswerkzeugen angebracht ist. Vorzugsweise ist der Datenträger mit einer Schnittstelle zum Auslesen der Authentifizierungsdaten gekoppelt. Die Schnittstelle kann Teil der Authentifizierungseinrichtung oder einer anderen Komponente des Probensammel-Kits sein. Das Probensammel-Kit kann eine einzige oder mehrere Authentifizierungseinrichtungen enthalten.

Gemäß einem zweiten allgemeinen Gesichtspunkt der Erfindung wird die oben genannte Aufgabe durch eine Authentifizierungsanordnung gelöst, die zur Prüfung eines Zustands des Probensammel-Kits gemäß dem ersten allgemeinen Gesichtspunkt der Erfindung oder einer Ausführungsform des Probensammel-Kits eingerichtet ist und das Probensammel-Kit, das die Authentifizierungseinrichtung enthält, und eine Testvorrichtung umfasst, die zum Auslesen der Authentifizierungsdaten und zur Authentifizierung des Probensammel-Kits eingerichtet ist.

Gemäß einem dritten allgemeinen Gesichtspunkt der Erfindung wird die oben genannte Aufgabe durch ein Verfahren zur Prüfung eines Zustands des Probensammel-Kits gemäß dem ersten allgemeinen Gesichtspunkt der Erfindung oder einer Ausführungsform des Probensammel-Kits gelöst, das die Schritte Auslesen der Authentifizierungsdaten und Authentifizierung des Probensammel-Kits mit einer Testvorrichtung und Erzeugung von einem Steuersignal, mit dem mindestens eines von einer Alarmeinrichtung, einer mechanischen Blockiereinrichtung und einer elektronischen Blockiereinrichtung aktivierbar ist, in Abhängigkeit von einer auf den Authentifizierungsdaten basierenden Authentifizierung umfasst. Das Verfahren zur Prüfung des Zustands des Probensammel-Kits kann einmalig vor Beginn der Anwendung oder bei Bedarf während der Anwendung, oder mehrfach in verschiedenen Phasen der Anwendung des Probensammel-Kits, oder laufend während der Anwendung des Probensammel-Kits durchgeführt werden.

Die Authentifizierung umfasst den Nachweis der Echtheit und Gebrauchsfähigkeit des Probensammel-Kits anhand der Authentifizierungsdaten. Vorzugsweise wird ein Vergleich der Authentifizierungsdaten mit Referenzdaten eines echten (original hergestellten), gebrauchsfähigen Probensammel-Kits durchgeführt. Im Ergebnis der Authentifizierung wird vorzugsweise das Steuersignal erzeugt. Es kann vorgesehen sein, dass das Steuersignal nur bei negativem Ergebnis als Blockiersignal erzeugt wird. Alternativ kann vorgesehen sein, dass das Steuersignal in jedem Fall, bei einem positiven Ergebnis als Freigabesignal und bei negativem Ergebnis als Blockiersignal erzeugt wird.

Untersuchungen der Erfinder haben ergeben, dass bei der praktischen Anwendung ein herkömmliches Probensammel-Kit, z. B. gemäß EP 3 257 586 A1, vom Nutzer am Sammelort über eine vorgegebene Haltbarkeitsdauer hinaus verwendet werden kann. Des Weiteren haben die Erfinder festgestellt, dass die Anwendung eines Kits, insbesondere von dessen Werkzeugen und/oder chemischen Behandlungsmitteln, über die Haltbarkeitsdauer hinaus sich nachteilig auf die Gewinnung der Pflanzenproben auswirken kann. Des Weiteren wurde festgestellt, dass aus Teilen von gebrauchten Kits und/oder gefälschten Teilen ein Probensammel-Kit unautorisiert neu zusammengestellt werden kann, das mit einem original hergestellten Probensammel-Kit verwechselbar ist. Überalterte und/oder unautorisiert zusammengestellte Probensammel-Kits können das Gesamtsystem kompromittieren, da sie dazu führen, dass Pflanzenproben, insbesondere Alginat, unter nicht reproduzierbaren Bedingungen, im ungünstigsten Fall sogar verunreinigt erzeugt werden.

Indem ein Probensammel-Kit erfindungsgemäß mit einer Authentifizierungseinrichtung ausgestattet wird, kann vorteilhafterweise die Prozesskette von der Sammlung von Pflanzen bis hin zur Gewinnung und Verarbeitung von Pflanzenproben aus den Pflanzen gegen Fälschungen oder Nutzerfehler gesichert werden. Die Authentifizierungseinrichtung ermöglicht vorteilhafterweise das Auslesen der Authentifizierungsdaten und die Authentifizierung des Probensammel-Kits mit der Testvorrichtung. Ein besonderer Vorteil der Authentifizierung besteht darin, dass die Anwendung von gefälschten und/oder überlagerten Probensammel-Kits ausgeschlossen wird.

Beim herkömmlichen Probensammel-Kit sind bereits Identifizierungsmarkierungen vorgesehen, mit denen jeweils Teile des Probensammel-Kits identifizierbar sind. Die Identifizierung erlaubt eine Zuordnung der Komponenten im Probensammel-Kit zu den konkret gewonnenen Pflanzenproben. Die herkömmlichen Identifizierungsmarkierungen enthalten jedoch anders als die erfindungsgemäß zusätzlich vorgesehene Authentifizierungseinrichtung keine Informationen über den Zustand des Probensammel-Kits in seiner Gesamtheit. Der Begriff "Zustand des Probensammel-Kits" bezieht sich auf die Gesamtkonfiguration des Probensammel-Kits als Verbindung seiner Komponenten. Die Informationen der, vorzugsweise aller, Identifizierungsmarkierungen können in den Authentifizierungsdaten enthalten sein.

Mit der Authentifizierungseinrichtung erhält das Probensammel-Kit eine neue Funktionalität. Die Anwendung des Probensammel-Kits kann in Abhängigkeit vom Ergebnis der Authentifizierung freigegeben (oder fortgesetzt) oder unterbunden (oder abgebrochen) werden.

Die Authentifizierungseinrichtung ist gemäß der Erfindung zusätzlich zu den Identifizierungsmarkierungen vorgesehen. Des Weiteren ist gemäß der Erfindung der Datenträger der Authentifizierungseinrichtung getrennt von den Identifizierungsmarkierungen vorgesehen. Wenn die Identifizierungsmarkierungen auch elektronisch auslesbaren Datenträger umfassen, ist die Authentifizierungseinrichtung vorzugsweise von den Identifizierungsmarkierungen elektrisch und/oder software-basiert getrennt. Der Datenträger der Authentifizierungseinrichtung bildet einen so genannten "secure enclave"-Datenspeicher. Vorzugsweise ist die Authentifizierungseinrichtung auch von einer optional vorgesehenen Steuereinrichtung des Probensammel-Kits elektrisch und/oder software-basiert getrennt angeordnet. Ein Zugriff von der Steuereinrichtung auf die Authentifizierungseinrichtung ist besonders bevorzugt ausgeschlossen. Vorzugsweise ist die Authentifizierungseinrichtung ein ROM-Speicher.

Gemäß einer bevorzugten Ausführungsform der Erfindung repräsentieren die Authentifizierungsdaten des elektronisch auslesbaren Datenträgers der Authentifizierungseinrichtung mindestens eines von einer Original-Konfiguration des Probensammel-Kits und einem Haltbarkeitsdatum des Probensammel-Kits. Diese Authentifizierungsdaten erlauben vorteilhafterweise eine Prüfung, ob die Original-Komponenten im Probensammel-Kit in Übereinstimmung mit einer Original-Konfiguration zusammenpassen und/oder ob eine vorgegebene Nutzungsdauer des Probensammel-Kits überschritten ist. Vorteilhafterweise können damit die wichtigsten Anwendungsfehler durch Nutzer überwacht und ausgeschlossen werden.

Besonders bevorzugt umfassen die Authentifizierungsdaten des elektronisch auslesbaren Datenträgers der Authentifizierungseinrichtung sowohl Informationen über die Original-Konfiguration des Probensammel-Kits und das Haltbarkeitsdatum des Probensammel-Kits. Gemäß einer bevorzugten Ausführungsform des erfindungsgemäßen Verfahren kann die Authentifizierung des Probensammel-Kits eine zweistufige Authentifizierung mit einem ersten Test des Originalzustands des mindestens einen Probensammel-Kits und eines Haltbarkeitsdatums des Probensammel-Kits und einem zweiten Test einer Zusammengehörigkeit der Teile des Probensammel-Kits umfasst. Vorzugsweise ist die Testvorrichtung der Authentifizierungsanordnung die für die zweistufige Authentifizierung eingerichtet. Beim ersten Test werden vorzugsweise die gespeicherten Informationen der Informationsmarkierungen mit Daten von Original-Komponenten verglichen. Beim zweiten Test wird vorzugsweise die Gesamtheit der Daten der Original-Komponenten mit einer vorgegebenen Original-Konfiguration und deren Haltbarkeit verglichen. Bei negativen Testergebnissen ist das Authentifizierungsergebnis negativ.

Gemäß einer weiteren bevorzugten Ausführungsform der Erfindung ist die Authentifizierungseinrichtung für eine Speicherung von verschlüsselten Authentifizierungsdaten eingerichtet. Durch die Verschlüsselung wird vorteilhafterweise eine unautorisierte Umgehung der Überwachung des Probensammel-Kits durch Nutzer ausgeschlossen. Die Authentifizierungsdaten können durch Nutzer nicht gefälscht oder verändert werden. Besonders bevorzugt ist eine kryptographische Verschlüsselung der Authentifizierungsdaten vorgesehen.

Vorzugsweise ist die Testvorrichtung der Authentifizierungsanordnung zur Entschlüsselung der Authentifizierungsdaten eingerichtet. Vorteilhafterweise kann die Testvorrichtung die Entschlüsselung unmittelbar zwischen dem Auslesen der Authentifizierungsdaten und der Authentifizierung des Probensammel-Kits ausführen.

Vorteilhafterweise kann die Authentifizierungseinrichtung für einen leitungsgebundenen Zugriff auf die Authentifizierungsdaten, insbesondere für ein leitungsgebundenes Auslesen der Authentifizierungsdaten, eingerichtet sein. In diesem Fall ist der Datenträger der Authentifizierungseinrichtung mit einer Leitungs-Schnittstelle, wie z. B. eine Steckerverbindung, ausgestattet, um eine Verbindung mit einer Testvorrichtung herzustellen und die gespeicherten Authentifizierungsdaten zu analysieren. Vorteilhafterweise ist damit ein unautorisierter drahtloser Zugriff auf den Datenträger ausgeschlossen.

Alternativ oder zusätzlich kann die Authentifizierungseinrichtung für einen drahtlosen Zugriff auf die Authentifizierungsdaten, insbesondere für ein drahtloses Auslesen der Authentifizierungsdaten, eingerichtet sein. In diesem Fall ergeben sich Vorteile durch eine schnelle Überprüfung des Probensammel-Kits und/oder die Möglichkeit einer Parallelisierung der Überprüfung einer Vielzahl von Probensammel-Kits.

Ein weiterer Vorteil der Erfindung ist es, dass verschiedene Typen von Authentifizierungseinrichtungen anwendbar sind. Gemäß bevorzugten Varianten umfasst die Authentifizierungseinrichtung mindestens eines von mindestens einem RFID-Beacon, mindestens einer Mobilfunk-SIM-Karte, mindestens einer WLAN-Sende-Empfangseinheit, einer Satellitentelefoneinheit und mindestens einem Bluetooth-Beacon. Diese Typen von Authentifizierungseinrichtungen haben besondere Vorteile in Bezug auf das drahtlose Auslesen der Authentifizierungsdaten unter Verwendung verfügbarer, robuster und ggf. kostengünstiger Technik.

Gemäß einer besonders bevorzugten Ausführungsform der Erfindung ist die Authentifizierungseinrichtung versteckt angeordnet und bei Gebrauch des Probensammel-Kits unsichtbar. Vorzugsweise ist die Authentifizierungseinrichtung so in das Probensammel-Kit, insbesondere in das Material von mindestens einer seiner Komponenten, eingebaut, dass die Authentifizierungseinrichtung vollständig oder, abgesehen von der optional vorgesehenen Leitungs-Schnittstelle, nahezu vollständig von dem Material bedeckt ist. Die Authentifizierungseinrichtung kann z. B. in Kunststoffmaterial einer Kit-Komponente einbettet sein. Vorteilhafterweise ist damit die Authentifizierungseinrichtung durch den Nutzer nicht erkennbar und/oder gegen einen unautorisierten Ausbau oder Austausch geschützt.

Alternativ oder zusätzlich kann die Authentifizierungseinrichtung so am Probensammel-Kit befestigt sein, dass die Authentifizierungseinrichtung nicht ohne eine mechanische Beschädigung des Probensammel-Kits von diesem trennbar ist.

Gemäß einer weiteren bevorzugten Ausführungsform der Erfindung weist das Probensammel-Kit eine Steuereinrichtung auf, die mit der Authentifizierungseinrichtung verbunden und zur Steuerung von mindestens einem von einer Alarmeinrichtung, einer mechanischen Blockiereinrichtung und einer elektronischen Blockiereinrichtung in Abhängigkeit von einer auf den Authentifizierungsdaten basierenden Authentifizierung eingerichtet ist. Vorteilhafterweise ist damit die Funktion der Authentifizierungseinrichtung einfacher zu überwachen und ggf. automatisierbar.

Vorzugsweise umfasst die Steuerung von mindestens einem von der Alarmeinrichtung, der mechanischen Blockiereinrichtung und der elektronischen Blockiereinrichtung eine Änderung des Betriebszustandes des Probensammel-Kits, wie z. B. eine Blockierung von mindestens einer von dessen Funktionen.

Gemäß einer bevorzugten Ausführungsform der Authentifizierungsanordnung ist die Testvorrichtung zur Erzeugung von einem Steuersignal, mit dem mindestens eines von einer Alarmeinrichtung, einer mechanischen Blockiereinrichtung und einer elektronischen Blockiereinrichtung aktivierbar ist, in Abhängigkeit von einer auf den Authentifizierungsdaten basierenden Authentifizierung eingerichtet. Besonders bevorzugt ist die Steuereinrichtung des Probensammel-Kits mit der Testvorrichtung zum Empfang des Steuersignals koppelbar.

Die Alarmeinrichtung ist z. B. für einen akustischen und/oder visuell wahrnehmbaren Alarm am Probensammel-Kit und/oder entfernt von diesem eingerichtet. Die Alarmeinrichtung kann zur Versendung eines Signals an eine zentrale Überwachungseinrichtung ausgebildet sein. Die mechanische Blockiereinrichtung ist dafür eingerichtet, einen mechanischen Zugriff auf das Probensammel-Kit zu unterbinden. Die mechanische Blockiereinrichtung umfasst z. B. einen mechanischen Riegel, der bei negativem Authentifizierungsergebnis das Probensammel-Kit blockiert, z. B. die Behältereinrichtung verschließt. Die elektronische Blockiereinrichtung ist entsprechend für eine Blockade von elektrisch betätigten Komponenten des Probensammel-Kits eingerichtet. Bei negativem Authentifizierungsergebnis kann die elektronische Blockiereinrichtung elektrisch betätigte Komponenten, wie z. B. die Datenaufzeichnungseinrichtung, abschalten.

Weitere Einzelheiten und Vorteile der Erfindung werden im Folgenden unter Bezug auf die beigefügten Zeichnungen beschrieben. Es zeigen schematisch:
- Figur 1:: eine Blockdarstellung eines Probensammel-Kits mit Merkmalen gemäß bevorzugten Ausführungsformen der Erfindung;
- Figur 2:: ein Flussdiagramm von Verfahren zur Prüfung eines Zustands eines Probensammel-Kits mit Merkmalen gemäß bevorzugten Ausführungsformen der Erfindung; und
- Figur 3:: eine Perspektivansicht eines Probensammel-Kits mit einem Stapel aus mehreren Behältermodulen.

Merkmale bevorzugter Ausführungsformen der Erfindung werden im Folgenden unter beispielhaftem Bezug auf ein Probensammel-Kit zur Sammlung von Algenproben für die Herstellung von Alginat beschrieben, wie es aus EP 3 257 586 A1 bekannt ist. EP 3 257 586 A1 wird hiermit durch Bezugnahme, insbesondere in Bezug auf das Probensammel-Kit und seine Anwendung, wie z. B. die Bereitstellung der Komponenten des Probensammel-Kits und ihrer Eigenschaften, in die vorliegende Offenbarung vollständig eingeführt.

Wie in EP 3 257 586 A1 beschrieben ist, werden die Algenproben vorzugsweise aus Makroalgen, insbesondere aus der Algenart Laminaria gewonnen. Die Umsetzung der Erfindung ist jedoch nicht auf das Probensammel-Kit aus EP 3 257 586 A1 oder eine Anwendung bei der Sammlung von Algen beschränkt, sondern entsprechend mit anderen Probensammel-Kits möglich, die eine andere Konfiguration, z. B. ohne den in EP 3 257 586 A1 beschriebenen Modulaufbau, und/oder eine andere Anwendung haben. Die Arbeitsmittel zur Sammlung von Algenproben, die im Probensammel-Kit enthalten sind, werden beispielhaft erwähnt. Die Umsetzung der Erfindung ist insbesondere nicht auf die Anwendung der konkret genannten Werkzeuge und Hilfsgeräte beschränkt, sondern mit abgewandelten, an die konkrete Anwendung angepassten Arbeitsmitteln realisierbar. Einzelheiten der Sammlung und Bearbeitung von Algenproben und die Auswahl geeigneter Algenarten werden im Folgenden nicht erläutert, soweit diese an sich bekannt und gebräuchlich sind.

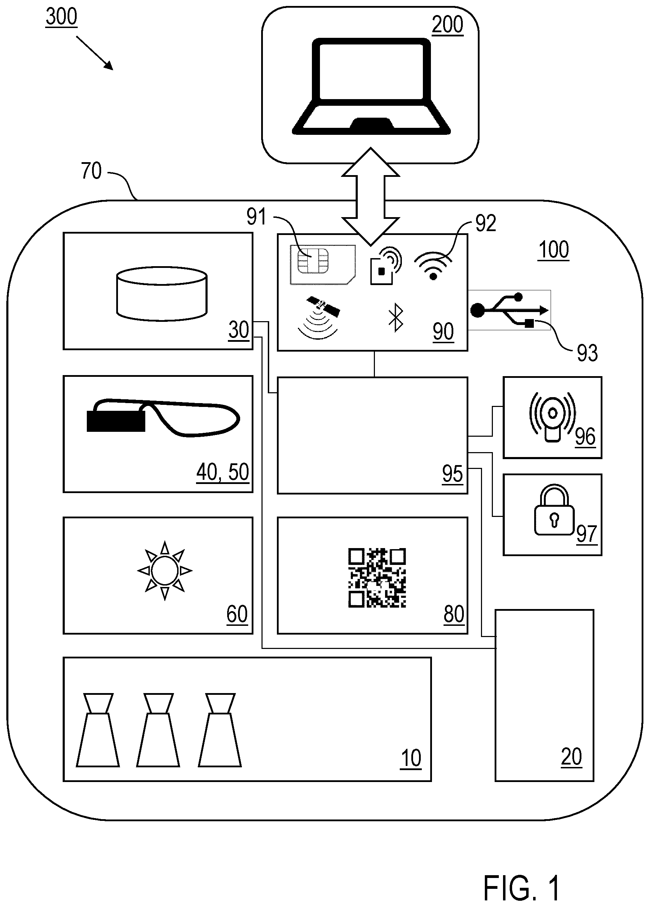

Figur 1 ist eine schematische Übersichtsdarstellung eines Probensammel-Kits 100 mit Merkmalen bevorzugter Ausführungsformen der Erfindung und einer Testvorrichtung 200. Gemeinsam stellen das Probensammel-Kit 100 und die Testvorrichtung 200 eine Ausführungsform einer Authentifizierungsanordnung 300 gemäß der Erfindung dar. Die Testvorrichtung 200 enthält einen Computer, optional mit einem Display, der leitungsgebunden oder drahtlos mit dem Probensammel-Kit 100 koppelbar ist.

Bei bevorzugten Anwendungen der Erfindung ist die Testvorrichtung 200 mit Abstand von dem Probensammel-Kit 100 angeordnet. Beispielsweise kann eine einzige Testvorrichtung 200 zur Authentifizierung von einem oder mehreren Probensammel-Kits 100 angeordnet sein.

Alternativ ist es möglich, die Testvorrichtung 200 in das Probensammel-Kit 100 zu integrieren. In diesem Fall wird die Authentifizierungsanordnung 300 durch das Probensammel-Kit 100 mit der integrierten Testvorrichtung 200 bereitgestellt. Die Testvorrichtung 200 kann z. B. durch die optional in dem Probensammel-Kit 100 enthaltene Steuereinrichtung 95 bereitgestellt werden.

Die Steuereinrichtung 95 umfasst eine Steuerschaltung, wie zum Beispiel einen Computerschaltkreis, in dem Daten von Komponenten des Probensammel-Kits 100 und/oder Steuersignale von der Testvorrichtung 200 empfangen und Steuersignale, insbesondere zur Ansteuerung einer Alarmeinrichtung 96 und/oder einer mechanischen und/oder elektronischen Blockeinrichtung 97 erzeugt werden.

Das Probensammel-Kit 100 umfasst in einer Behältereinrichtung 70 eine Vielzahl von Probenbehältern 10, wie zum Beispiel Behälterbeutel und/oder Behälterflaschen. Vor Anwendung des Probensammel-Kits 100 sind die leeren oder mit Behandlungsflüssigkeiten vorgefüllten Probenbehälter 10 zur Aufnahme bereit im Probensammel-Kit 100 enthalten. Nach der Sammlung von Pflanzenproben sind die mit den Pflanzenproben gefüllten Behälter 10 im Probensammel-Kit 100 oder einem gesonderten Sammlungsbehälter enthalten.

Des Weiteren umfasst das Probensammel-Kit 100 in der Behältereinrichtung 70 eine Sensoreinrichtung 20, die zur Erfassung von Umgebungsbedingungen insbesondere bei der Sammlung, dem Transport und/oder der Verarbeitung von Pflanzenproben eingerichtet ist und mindestens einen Sensor enthält. Mit der Sensoreinrichtung 20 können zum Beispiel die Temperatur, die Luftfeuchte, der Salzgehalt in einem Umgebungsmedium und/oder in einem Probenbehälter, ein CO₂-Gehalt und/oder eine mechanische Beschleunigung des Probensammel-Kits 100 erfasst werden. Die Sensoreinrichtung 20 ist mit einer Datenaufzeichnungseinrichtung 30 und/oder mit der optional vorgesehenen Steuereinrichtung 95 gekoppelt.

Weitere Komponenten, wie die Datenaufzeichnungseinrichtung 30 und eine Werkzeuganordnung 40, 50 sowie eine Geräteanordnung 60 mit Hilfsgeräten, eine Energiespeichereinrichtung, wie z. B. ein aufladbarer Akkumulator, und Identifizierungsmarkierungen 80 können in der Behältereinrichtung 70 des Probensammel-Kits 100 enthalten sein, wie in EP 3 257 586 A1 beschrieben ist. Die Datenaufzeichnungseinrichtung 30 ist mit der Steuereinrichtung 95 gekoppelt. Optional können auch elektrisch betriebene oder elektronische Teile der Komponenten 40, 50, 60 und 80 mit der Steuereinrichtung 95 gekoppelt sein.

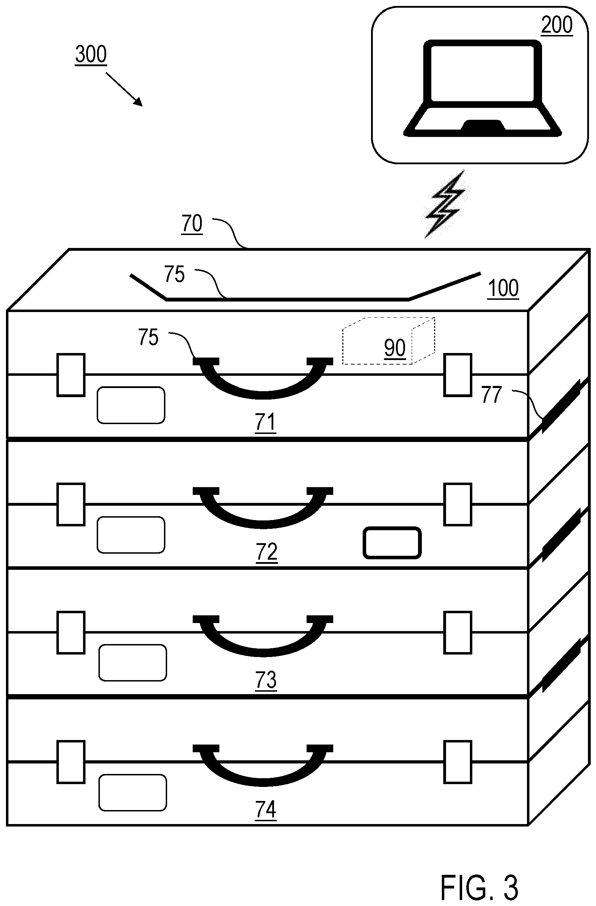

Die Behältereinrichtung 70 kann einen einzigen Behälter umfassen, der alle Komponente des Probensammel-Kits 100 gemeinsam aufnimmt. Bevorzugt umfasst die Behältereinrichtung 70 gemäß Figur 3 mehrere Behältermodule 71, 72, 73 und 74, in denen die Komponenten des Probensammel-Kits 100, zum Beispiel gemäß Figur 1, untergebracht sind. Das Probensammel-Kit 100 bildet in diesem Fall, der auch in EP 3 257 586 A1 beschrieben ist, einen an Griffen 75 tragbaren Koffer, der manuell zum Probensammelort transportiert werden kann.

Gemäß der Erfindung enthält das Probensammel-Kit 100 mindestens eine Authentifizierungseinrichtung 90. Die Authentifizierungseinrichtung 90 ist als Teil des Probensammel-Kits 100 in der Behältereinrichtung 70 enthalten und vorzugsweise im Material der Behältereinrichtung 70 eingebettet versteckt angeordnet, z. B. in einem Kunststoff-Material der Behältereinrichtung 70 eingegossen. Alternativ oder zusätzlich ist mindestens eine Authentifizierungseinrichtung 90 an einer oder mehreren Komponenten des Probensammel-Kits 100 vorgesehen. Die Authentifizierungseinrichtung 90 ist in Figur 3 schematisch gezeigt, wobei die gestrichelte Illustration symbolisiert, dass die Authentifizierungseinrichtung 90 durch den Nutzer des Probensammel-Kits 100 nicht erkennbar ist.

Die Authentifizierungseinrichtung 90 umfasst, wie schematisch in Figur 1 illustriert ist, einen elektronischen Datenträger 91 und eine drahtlose Schnittstelle 92 und/oder eine leitungsgebundene Schnittstelle 93. Die Authentifizierungseinrichtung 90 wird mit der Energiespeichereinrichtung (nicht gezeigt) des Probensammel-Kits 100 oder mit einem internen Akkumulator mit elektrischer Energie versorgt. Die Energieversorgung kann leitungsgebunden oder induktiv erfolgen. Der Datenträger 91 ist ein elektronischer Speicher, der die Authentifizierungsdaten enthält, wie z. B. eine Mobilfunk-SIM-Karte. Die gespeicherten Authentifizierungsdaten umfassen zum Beispiel eine Liste mit einer Vielzahl von Daten, die für den Originalzustand des Probensammel-Kits 100 charakteristisch sind. Hierzu zählen vorzugsweise eine Haltbarkeitsdauer des Probensammel-Kits 100 und/oder eine Liste der im Probensammel-Kit 100 enthaltenen Komponenten, z. B. jeweils mit ihren Identifizierungsdaten. Alternativ oder zusätzlich können weitere Authentifizierungsdaten in der Authentisierungseinrichtung 90 gespeichert sein. Die Authentifizierungsdaten können in der Authentisierungseinrichtung 90 verschlüsselt gespeichert sein.

Die drahtlose Schnittstelle 92 umfasst allgemein eine Antenne zur Abstrahlung elektromagnetischer Strahlung, typischerweise im Radiofrequenzbereich, die über eine Treiberschaltung mit dem Datenträger verbunden ist. Alternativ kann eine drahtlose Informationsübertragung auch durch eine optische Verbindung vorgesehen sein, wobei in diesem Fall die drahtlose Schnittstelle 91 durch eine Lichtquelle gebildet wird. Einzelheiten der drahtlosen Schnittstelle 91 sind in Abhängigkeit von der konkreten technischen Konfiguration gewählt. Beispielsweise ist eine Mobilfunk-Antenne oder ein Bluetooth-Antenne vorgesehen. Die leitungsgebundene Schnittstelle 92 umfasst zum Beispiel einen USB-Anschluss zur Kopplung der Testvorrichtung 200 mit der Authentifizierungseinrichtung 90.

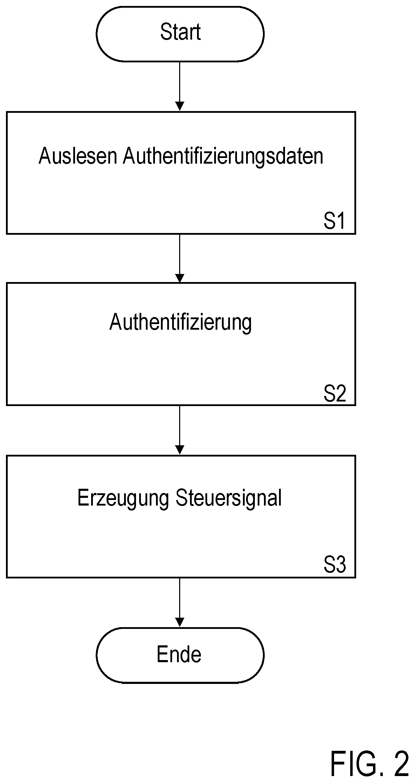

Die Ausführung des Verfahrens zur Überprüfung des Zustands des Probensammel-Kits 100 ist schematisch in Figur 2 illustriert. Zunächst erfolgt ein Auslesen der Authentifizierungsdaten aus der Authentifizierungseinrichtung 90 (Schritt S1). Das Auslesen umfasst eine Übertragung der Authentifizierungsdaten über die drahtlose Schnittstelle 91 und/oder die leitungsgebundene Schnittstelle 92 zu der Testvorrichtung 200.

Anschließend erfolgt eine Authentifizierung des Probensammel-Kits 100 mit der Testvorrichtung 200, wobei die empfangenen Authentifizierungsdaten verwendet werden (Schritt S2). Die Authentifizierung umfasst optional eine Entschlüsselung der Authentifizierungsdaten. Die Authentifizierungsdaten werden dann mit Referenzdaten verglichen, welche in der Testvorrichtung 200 gespeichert sind. Wenn eine Übereinstimmung der Authentifizierungsdaten mit den Referenzdaten festgestellt wird, gilt das Probensammel-Kit 100 als authentifiziert. Im Fall einer positiven Authentifizierung kann als Steuersignal ein Freigabesignal erzeugt werden, welches beispielsweise zur Freigabe einer Blockiereinrichtung und/oder zur Erzeugung eines optisch und/oder akustisch wahrnehmbaren Signals der Freigabe des Probensammel-Kits 100 gebildet ist.

Werden Abweichungen der Authentifizierungsdaten von den Referenzdaten festgestellt, wird vorzugsweise als Steuersignal ein Blockiersignal zur Aktivierung der Alarmeinrichtung 96 und/oder der Blockiereinrichtung 97 erzeugt, um eine weitere Anwendung des Probensammel-Kits 100 auszuschließen (Schritt S3).

Wenn die Testvorrichtung 200 mit der Steuereinrichtung 95 gekoppelt oder in dieser enthalten ist, kann das Steuersignal durch die Steuereinrichtung 95 erzeugt werden. Abweichend von der Illustration gemäß Figur 1 kann die Testvorrichtung 200 direkt mit der Alarmeinrichtung 96 und/ oder Blockiereinrichtung 97 gekoppelt sein, um das Steuersignal direkt zu übertragen.

Zusammengefasst wird mit der Erfindung ein Probensammel-Kit mit einer elektronischen Authentifizierungsfunktion geschaffen. Beispielsweise RFID-Beacons oder ähnliche auslesbare Datenträger werden verwendet, um die Echtheit des Probensammel-Kits zu verifizieren. Die Prüfung der Integrität des Kits kann zweistufig erfolgen. In einer ersten Prüfung kann festgestellt werden, ob es sich um ein Original-Kit handelt und sein Haltbarkeitsdatum nicht überschritten ist. In einer zweiten Prüfung wird geprüft, ob die Teile des Kits zueinander passen, d. h. ob es Original-Teile des Originalkits sind. Wenn die Authentifizierung fehlschlägt, kann eine Blockade des Kits oder eines im Kit enthaltenen Steuergeräts vorgesehen sein. Es kann auch eine Warnmeldung erzeugt werden.

Die in der vorstehenden Beschreibung, den Zeichnungen und den Ansprüchen offenbarten Merkmale der Erfindung können sowohl einzeln auch in Kombination oder in Unterkombination für die Verwirklichung der Erfindung in ihren verschiedenen Ausgestaltungen von Bedeutung sein.

## Patentansprüche

1. Probensammel-Kit (100), das zur Sammlung von Pflanzenproben, insbesondere von Algenproben für biomedizinische Anwendungen, eingerichtet ist, umfassend:
- mindestens einen Probenbehälter (10), der zur Aufnahme der Pflanzenproben eingerichtet ist,
- eine Sensoranordnung (20) mit mehreren Sensoren (21, 22, ...), mit denen Probendaten erfassbar sind,
- eine Datenaufzeichnungseinrichtung (30), die zur Aufzeichnung der Probendaten eingerichtet ist,
- eine Werkzeuganordnung (40, 50) mit Sammelwerkzeugen (41, 42, ...), die für eine Ernte der Pflanzenproben eingerichtet sind, und mit Bearbeitungswerkzeugen (51, 52, ...), die für eine Bearbeitung der Pflanzenproben eingerichtet sind,
- eine Behältereinrichtung (70), die zur Aufnahme der Werkzeuganordnung und einer Geräteanordnung in einem von der Umgebung isolierten Zustand eingerichtet ist, und
- Identifizierungsmarkierungen (80), die Identifizierungsdaten enthalten und an dem mindestens einen Probenbehälter, den Sammelwerkzeugen (41, 42, ...) und den Bearbeitungswerkzeugen (51, 52, ...) angebracht sind,
**dadurch gekennzeichnet, dass**
- zusätzlich zu den Identifizierungsmarkierungen (80) eine Authentifizierungseinrichtung (90) vorgesehen ist, die einen elektronisch auslesbaren Datenträger mit Authentifizierungsdaten enthält, die einen Zustand des Probensammel-Kits (100) in seiner Gesamtheit, umfassend eine Gesamtkonfiguration des Probensammel-Kits (100) als Verbindung seiner Komponenten repräsentieren und für einen Nachweis einer Echtheit und Gebrauchsfähigkeit des Probensammel-Kits (100) vorgesehen sind, wobei
- die Authentifizierungseinrichtung (90) an mindestens einem von der Behältereinrichtung (70), dem mindestens einen Probenbehälter, den Sammelwerkzeugen (41, 42, ...) und den Bearbeitungswerkzeugen (51, 52, ...) angebracht ist, und
- die Authentifizierungseinrichtung (90) getrennt von den Identifizierungsmarkierungen (80) vorgesehen ist.

2. Probensammel-Kit gemäß Anspruch 1, bei dem
- die Authentifizierungsdaten des elektronisch auslesbaren Datenträgers der Authentifizierungseinrichtung (90) mindestens eines von einer Original-Konfiguration des Probensammel-Kits (100) und einem Haltbarkeitsdatum des Probensammel-Kits (100) repräsentieren.

3. Probensammel-Kit gemäß einem der vorhergehenden Ansprüche, bei dem
- die Authentifizierungseinrichtung (90) für eine Speicherung von verschlüsselten Authentifizierungsdaten eingerichtet ist.

4. Probensammel-Kit gemäß einem der vorhergehenden Ansprüche, bei dem
- die Authentifizierungseinrichtung (90) für einen leitungsgebundenen Zugriff auf die Authentifizierungsdaten eingerichtet ist.

5. Probensammel-Kit gemäß einem der vorhergehenden Ansprüche, bei dem
- die Authentifizierungseinrichtung (90) für ein drahtloses Auslesen der Authentifizierungsdaten eingerichtet ist.

6. Probensammel-Kit gemäß einem der vorhergehenden Ansprüche, bei dem
- die Authentifizierungseinrichtung (90) mindestens eines von mindestens einem RFID-Beacon, mindestens einer Mobilfunk-SIM-Karte, mindestens einer WLAN-Sende-Empfangseinheit, einer Satellitentelefoneinheit und mindestens einem Bluetooth-Beacon umfasst.

7. Probensammel-Kit gemäß einem der vorhergehenden Ansprüche, bei dem
- die Authentifizierungseinrichtung (90) versteckt angeordnet und bei Gebrauch des Probensammel-Kits (100) unsichtbar ist.

8. Probensammel-Kit gemäß einem der vorhergehenden Ansprüche, ferner umfassend
- eine Steuereinrichtung (95), die mit der Authentifizierungseinrichtung (90) verbunden und zur Steuerung von mindestens einem von einer Alarmeinrichtung (96), einer mechanischen Blockiereinrichtung (97) und einer elektronischen Blockiereinrichtung (97) in Abhängigkeit von einer auf den Authentifizierungsdaten basierenden Authentifizierung eingerichtet ist.

9. Probensammel-Kit gemäß einem der vorhergehenden Ansprüche, bei dem
- die Authentifizierungseinrichtung (90) mit einer Schnittstelle zum Auslesen der Authentifizierungsdaten gekoppelt ist

10. Authentifizierungsanordnung (300), die zur Prüfung eines Zustands eines Probensammel-Kits (100) gemäß einem der vorhergehenden Ansprüche eingerichtet ist, umfassend
- das Probensammel-Kit (100), das die Authentifizierungseinrichtung (90) enthält, und
- eine Testvorrichtung (200), die zum Auslesen der Authentifizierungsdaten und zur Authentifizierung des Probensammel-Kits eingerichtet ist.

11. Authentifizierungsanordnung gemäß Anspruch 10, bei der
- die Testvorrichtung (200) für eine zweistufige Authentifizierung, umfassend einen ersten Test des Originalzustands des mindestens einen Probensammel-Kits und eines Haltbarkeitsdatums des Probensammel-Kits und einen zweiten Test einer Zusammengehörigkeit der Teile des Probensammel-Kits, eingerichtet ist.

12. Authentifizierungsanordnung gemäß einem der Ansprüche 10 bis 11, bei der
- die Testvorrichtung (200) zur Erzeugung von einem Steuersignal zur Aktivierung von mindestens einem von einer Alarmeinrichtung (96), einer mechanischen Blockiereinrichtung (96) und einer elektronischen Blockiereinrichtung (96) in Abhängigkeit von einer auf den Authentifizierungsdaten basierenden Authentifizierung eingerichtet ist.

13. Authentifizierungsanordnung gemäß einem der Ansprüche 10 bis 12, bei der
- die Testvorrichtung (200) zur Entschlüsselung der Authentifizierungsdaten eingerichtet ist.

14. Verfahren zur Prüfung eines Zustands eines Probensammel-Kits (100) gemäß einem der Ansprüche 1 bis 9, umfassend die Schritte
- Auslesen der Authentifizierungsdaten und Authentifizierung des Probensammel-Kits (100) mit einer Testvorrichtung (200), und
- Erzeugung von einem Steuersignal, mit dem mindestens eines von einer Alarmeinrichtung (96), einer mechanischen Blockiereinrichtung (97) und einer elektronischen Blockiereinrichtung (97) aktivierbar ist, in Abhängigkeit von einer auf den Authentifizierungsdaten basierenden Authentifizierung.

15. Verfahren gemäß Anspruch 14, bei dem
- die Authentifizierung des Probensammel-Kits (100) eine zweistufige Authentifizierung mit einem ersten Test des Originalzustands des mindestens einen Probensammel-Kits (100) und eines Haltbarkeitsdatums des Probensammel-Kits (100) und einem zweiten Test einer Zusammengehörigkeit der Teile des Probensammel-Kits (100) umfasst.

## Claims

1. Sample collection kit (100) configured to collect plant samples, in particular algae samples for biomedical applications, comprising:
- at least one sample container (10) configured for accommodating the plant samples,
- a sensor arrangement (20) with several sensors (21, 22, ...), with which sample data can be recorded,
- a data recording device (30) configured to record the sample data,
- a tool arrangement (40, 50) with collecting tools (41, 42, ...) configured for harvesting the plant samples and with processing tools (51, 52, ...) configured for processing the plant samples,
- a container device (70) configured for accommodating the tool arrangement and a device arrangement in a state isolated from the environment, and
- identification markings (80) which contain identification data and are attached to the at least one sample container, the collecting tools (41, 42, ...) and the processing tools (51, 52, ...),
**characterized in that**
- in addition to the Identification markings (80), an authentication device (90) is provided, which contains an electronically readable data carrier with authentication data, which represent a state of the sample collection kit (100) in its entirety, comprising a general configuration of the sample collection kit (100) as a connection of its components and are provided for a proof of authenticity and usability of the sample collection kit (100), wherein
- the authentication device (90) is attached to at least one of the container device (70), the at least one sample container, the collecting tools (41, 42, ...) and the processing tools (51, 52, ...), and
- the authentication device (90) is provided separately from the identification markings (80).

2. Sample collection kit according to claim 1, wherein
- the authentication data of the electronically readable data carrier of the authentication device (90) represents at least one of an original configuration of the sample collection kit (100) and an expiration date of the sample collection kit (100).

3. Sample collection kit according to any one of the preceding claims, wherein
- the authentication device (90) is configured for storing encrypted authentication data.

4. Sample collection kit according to any one of the preceding claims, wherein
- the authentication device (90) is configured for wired access to the authentication data.

5. Sample collection kit according to any one of the preceding claims, wherein
- the authentication device (90) is configured for wireless readout of the authentication data.

6. Sample collection kit according to any one of the preceding claims, wherein
- the authentication device (90) comprises at least one of at least one RFID beacon, at least one mobile SIM card, at least one WLAN transceiver unit, a satellite phone unit and at least one Bluetooth beacon.

7. Sample collection kit according to any one of the preceding claims, wherein
- the authentication device (90) is hidden and invisible when the sample collection kit (100) is in use.

8. Sample collection kit according to any one of the preceding claims, further comprising
- a control device (95) connected to the authentication device (90) and configured for controlling at least one of an alarm device (96), a mechanical blocking device (97) and an electronic blocking device (97) in dependence on an authentication based on the authentication data.

9. Sample collection kit according to any one of the preceding claims, wherein
- the authentication device (90) is coupled to an interface for reading out the authentication data.

10. Authentication arrangement (300) configured to check a state of a sample collection kit (100) according to any one of the preceding claims, comprising
- the sample collection kit (100) containing the authentication device (90), and
- a test device (200) configured to read out the authentication data and to authenticate the sample collection kit.

11. Authentication arrangement according to claim 10, wherein
- the test device (200) is configured for a two-step authentication, comprising a first test of the original state of the at least one sample collection kit and a shelf life date of the sample collection kit and a second test of a membership of the parts of the sample collection kit.

12. Authentication arrangement according to any one of claims 10 to 11, wherein
- the test device (200) is configured to generate a control signal for activating at least one of an alarm device (96), a mechanical blocking device (96) and an electronic blocking device (96) in response to an authentication based on the authentication data.

13. Authentication arrangement according to any one of claims 10 to 12, wherein
- the test device (200) is configured to decrypt the authentication data.

14. Method for testing a state of a sample collection kit (100) according to any one of claims 1 to 9, comprising the steps of
- Reading out the authentication data and authenticating the sample collection kit (100) with a test device (200), and
- generating a control signal with which at least one of an alarm device (96), a mechanical blocking device (97) and an electronic blocking device (97) can be activated, depending on an authentication based on the authentication data.

15. Method according to claim 14, wherein
- the authentication of the sample collection kit (100) comprises a two-step authentication with a first test of the original state of the at least one sample collection kit (100) and a shelf life date of the sample collection kit (100) and a second test of a membership of the parts of the sample collection kit (100).

## Revendications

1. Ensemble de collecte d'échantillons (100), qui est mis au point pour collecter des échantillons de végétaux, en particulier des échantillons d'algues pour des applications biomédicales, comprenant :
- au moins un récipient à échantillons (10), qui est mis au point pour recevoir les échantillons de végétaux,
- un ensemble de capteurs (20) avec plusieurs capteurs (21, 22,...) permettant de détecter des données d'échantillon,
- un dispositif d'enregistrement de données (30), qui est mis au point pour enregistrer les données d'échantillon,
- un ensemble d'outils (40, 50) avec des outils de collecte (41, 42,...), qui sont mis au point pour la récolte des échantillons végétaux, et avec des outils de traitement (51, 52,...), qui sont mis au point pour un traitement des échantillons végétaux,
- un dispositif de récipient (70), qui est mis au point pour recevoir l'ensemble d'outils et un ensemble d'appareils dans un état isolé de l'environnement, et
- des repères d'identification (80), qui contiennent des données d'identification et qui sont installés sur l'au moins un récipient à échantillons, les outils de collecte (41, 42,...) et les outils d'usinage (51, 52,...),
**caractérisé en ce que**
- en complément des repères d'identification (80), un dispositif d'authentification (90) est prévu, qui contient un support de données lisible électroniquement avec des données d'authentification, qui représentent un état de l'ensemble de collecte d'échantillons (100) dans sa globalité, comprenant une configuration globale de l'ensemble de collecte d'échantillons (100) en tant que liaison de ses composants et sont prévues pour prouver une authenticité et une utilité de l'ensemble de collecte d'échantillons (100), dans lequel
- le dispositif d'authentification (90) est installé sur au moins un du dispositif de récipient (70), de l'au moins un récipient à échantillons, des outils de collecte (41, 42,...) et des outils de traitement (51, 52,...), et
- le dispositif d'authentification (90) est prévu séparément des repères d'identification (80).

2. Ensemble de collecte d'échantillons selon la revendication 1, dans lequel
- les données d'authentification du support de données lisible électroniquement du dispositif d'authentification (90) représentent au moins un élément d'une configuration d'origine de l'ensemble de collecte d'échantillons (100) et d'une date de péremption de l'ensemble de collecte d'échantillons (100).

3. Ensemble de collecte d'échantillons selon l'une quelconque des revendications précédentes, dans lequel
- le dispositif d'authentification (90) est mis au point pour un stockage de données d'authentification chiffrées.

4. Ensemble de collecte d'échantillons selon l'une quelconque des revendications précédentes, dans lequel
- le dispositif d'authentification (90) est mis au point pour un accès filaire aux données d'authentification.

5. Ensemble de collecte d'échantillons selon l'une quelconque des revendications précédentes, dans lequel
- le dispositif d'authentification (90) est mis au point pour une lecture sans fil des données d'authentification.

6. Ensemble de collecte d'échantillons selon l'une quelconque des revendications précédentes, dans lequel
- le dispositif d'authentification (90) comprend au moins un d'au moins une balise RFID, d'au moins une carte SIM de téléphonie mobile, d'au moins une unité d'émission-réception Wi-Fi, d'une unité de téléphone satellite et d'au moins une balise Bluetooth.

7. Ensemble de collecte d'échantillons selon l'une quelconque des revendications précédentes, dans lequel
- le dispositif d'authentification (90) est dissimulé et invisible lors de l'utilisation de l'ensemble de collecte d'échantillons (100).

8. Ensemble de collecte d'échantillons selon l'une des revendications précédentes, comprenant en outre
- un dispositif de commande (95), qui est relié au dispositif d'authentification (90) et qui est mis au point pour commander au moins un d'un dispositif d'alarme (96), d'un dispositif de blocage mécanique (97) et d'un dispositif de blocage électronique (97), en fonction d'une authentification basée sur les données d'authentification.

9. Ensemble de collecte d'échantillons selon l'une quelconque des revendications précédentes, dans lequel
- le dispositif d'authentification (90) est couplé à une interface de lecture des données d'authentification

10. Ensemble d'authentification (300), qui est mis au point pour vérifier un état d'un ensemble de collecte d'échantillons (100) selon l'une quelconque des revendications précédentes, comprenant
- l'ensemble de collecte d'échantillons (100), qui contient le dispositif d'authentification (90), et
- un système de test (200), qui est mis au point pour lire les données d'authentification et pour authentifier l'ensemble de collecte d'échantillons.

11. Ensemble d'authentification selon la revendication 10, dans lequel
- l'équipement de test (200) est mis au point pour une authentification à deux étapes, comprenant un premier test de l'état d'origine de l'au moins un ensemble de collecte d'échantillons et d'une date de péremption, et un deuxième test d'une appartenance des parties de l'ensemble de collecte d'échantillons.

12. Ensemble d'authentification selon l'une quelconque des revendications 10 à 11, dans lequel
- l'équipement de test (200) est mis au point pour générer un signal de commande pour activer au moins un d'un dispositif d'alarme (96), d'un dispositif de blocage mécanique (96) et d'un dispositif de blocage électronique (96), en fonction d'une authentification basée sur les données d'authentification.

13. Ensemble d'authentification selon l'une quelconque des revendications 10 à 12, dans lequel
- l'équipement de test (200) est mis au point pour déchiffrer les données d'authentification.

14. Procédé de vérification d'un état d'un ensemble de collecte d'échantillons (100) selon l'une quelconque des revendications 1 à 9, comprenant les étapes
- de lecture des données d'authentification et d'authentification de l'ensemble de collecte d'échantillons (100) avec un équipement de test (200), et
- de génération d'un signal de commande permettant d'activer au moins un d'un dispositif d'alarme (96), d'un dispositif de blocage mécanique (97) et d'un dispositif de blocage électronique (97), en fonction d'une authentification basée sur les données d'authentification.

15. Procédé selon la revendication 14, dans lequel
- l'authentification de l'ensemble de collecte d'échantillons (100) comprend une authentification en deux étapes avec un premier test de l'état d'origine de l'au moins un ensemble de collecte d'échantillons (100) et d'une date de péremption de l'ensemble de collecte d'échantillons (100) et un deuxième test d'une appartenance des parties de l'ensemble de collecte d'échantillons (100).
